# EUROPEAN PATENT SPECIFICATION

(11) **EP 2 966 499 B1**
(45) Date of publication and mention of the grant of the patent: **04.01.2017**
(21) Application number: 14760378.1
(22) Date of filing: 21.02.2014
(51) Int. Cl.: G02F 1/1343, G02F 1/139, G02F 1/137, G02F 1/1337, G02F 1/1335

(54) **LIQUID CRYSTAL DISPLAY DEVICE**
FLÜSSIGKRISTALLANZEIGEVORRICHTUNG
DISPOSITIF D'AFFICHAGE À CRISTAUX LIQUIDES

(30) Priority: 07.03.2013 JP 2013045835
(43) Date of publication of application: 13.01.2016
(73) Proprietor: Sharp Kabushiki Kaisha, Osaka-shi, Osaka 545-8522 (JP)
(72) Inventor: KITA Yuichi, Osaka 545-8522 (JP); NAKATANI Yoshiki, Osaka 545-8522 (JP); IMAOKU Takao, Osaka 545-8522 (JP); AOYAMA Iori, Osaka 545-8522 (JP); YOSHIOKA Takatomo, Osaka 545-8522 (JP)
(74) Representative: Müller Hoffmann & Partner
(86) International application number: PCT/JP2014/054148
(87) International publication number: WO 2014/136586

(56) References cited:
- WO-A1-2009/122716
- JP-A- H09 236 819
- JP-A- 2002 365 657
- JP-A- 2004 354 407
- US-A- 6 097 465
- US-A1- 2014 002 761
- DONG HAN SONG ET AL: "Dual-mode operation of a twisted nematic liquid crystal cell by switching between dynamic and memory modes", OPTICS LETTERS, OPTICAL SOCIETY OF AMERICA, US, vol. 36, no. 11, 1 June 2011 (2011-06-01), pages 2077-2079, XP001563367, ISSN: 0146-9592, DOI: 10.1364/OL.36.002077 [retrieved on 2011-05-27]

## Description

### TECHNICAL FIELD

The present invention relates to a liquid crystal display device, and more particularly to a liquid crystal display device which is suitable for use as a see-through display.

### BACKGROUND ART

In recent years, see-through displays have been attracting attention as the display devices for information display systems or digital signage. In a see-through display, the background (i.e., the rear-face side of the display panel) is visible in a see-through manner, whereby information to be indicated on the display panel is displayed as if overlaid on the background. Thus, a see-through display has good appeal and eyecatchingness. Application of see-through displays to showcases and show windows has also been proposed.

In the case where a liquid crystal display device is used for a see-through display, its low efficiency of light utilization will be a detriment. The reasons for the low efficiency of light utilization of a liquid crystal display device are the color filters and polarizing plates, which are provided in generic liquid crystal display devices. The color filters and polarizing plates absorb light in specific wavelength regions or light of specific polarization directions.

This has led to the idea of using a liquid crystal display device of the field sequential method. Under the field sequential method, multicolor displaying is performed through time-division switching between colors of light with which a liquid crystal display panel is irradiated from an illumination element. This eliminates the need for color filters, thus improving the efficiency of light utilization. However, in the field sequential method, the liquid crystal display device needs to have a rapid response.

Patent Documents 1 and 2 disclose liquid crystal display devices having improved response characteristics because of an electrode structure being provided which is capable of switchably generating a vertical field and a lateral field across the liquid crystal layer. In the liquid crystal display devices disclosed in Patent Documents 1 and 2, a vertical field is generated across the liquid crystal layer in either one of the transition (rise) from a black displaying state to a white displaying state and the transition (fall) from a white displaying state to a black displaying state, while a lateral field (fringing field) is generated across the liquid crystal layer in the other. Therefore, the torque due to voltage application acts on the liquid crystal molecules in both of a rise and a fall, whereby good response characteristics are attained.

Patent Document 3 also proposes a liquid crystal display device which realizes a rapid response by allowing the alignment regulating force of an electric field to act on the liquid crystal molecules in both a rise and a fall.

### CITATION LIST

### PATENT LITERATURE

[Patent Document 1] Japanese National Phase PCT Laid-Open Publication No. 2006-523850
[Patent Document 2] Japanese Laid-Open Patent Publication No. 2002-365657
[Patent Document 3] International Publication No. 2013/001979

Don Han Song et al. in Optics Letters Vol 36, No 11, 2077-2079 2011, discloses a liquid crystal display device with a structure similar to the invention, which comprises an additional patterned electrode on the bottom electrode and has a dynamic display mode and a memory display mode.

### SUMMARY OF INVENTION

### TECHNICAL PROBLEM

However, it has been found that when such liquid crystal display devices as are disclosed in Patent Documents 1, 2 and 3 are used for a see-through display, the problem of background blur (it being perceived as double images) occurs for reasons that are described in detail later, thus deteriorating the display quality. Note that Patent Documents 1, 2 and 3 themselves fail to mention any such use (i.e., application to a see-through display); the aforementioned problem is a new finding by the inventors.

The present invention has been made in view of the above problems, and an objective thereof is to provide a liquid crystal display device which excels in both response characteristics and display quality, the liquid crystal display device being suitable for use as a see-through display.

### SOLUTION TO PROBLEM

A liquid crystal display device according to the present invention is a liquid crystal display device according to claim 1. Preferred developments are defined in the dependent claims.

### ADVANTAGEOUS EFFECTS OF INVENTION

According to an embodiment of the present invention, there is provided a liquid crystal display device which excels in both response characteristics and display quality, the liquid crystal display device being suitable for use as a see-through display.

### BRIEF DESCRIPTION OF DRAWINGS

[FIG. **1**] A cross-sectional view schematically showing a liquid crystal display device **100.**
[FIG. **2**] A plan view schematically showing a liquid crystal display device **100.**
[FIG. **3**] A plan view showing a specific wiring structure for a rear substrate **10** of the liquid crystal display device **100.**
[FIG. **4**] **(a)** and **(b)** are a cross-sectional view and a plan view showing an alignment of liquid crystal molecules **31** in a black displaying state of the liquid crystal display device **100.**
[FIG. **5**] **(a)** and **(b)** are a cross-sectional view and a plan view showing an alignment of liquid crystal molecules **31** in a white displaying state of the liquid crystal display device **100.**
[FIG. **6**] **(a)** and **(b)** are a cross-sectional view and a plan view showing an alignment of liquid crystal molecules **31** in a transparent displaying state of the liquid crystal display device **100.**
[FIG. **7**] A cross-sectional view schematically showing a liquid crystal display device **200** according to an embodiment of the present invention.
[FIG. **8**] A plan view schematically showing a liquid crystal display device **200** according to an embodiment of the present invention.
[FIG. **9**] **(a)** and **(b)** are a cross-sectional view and a plan view showing an alignment of liquid crystal molecules **31** in a black displaying state of the liquid crystal display device **200.**
[FIG. **10**] **(a)** and **(b)** are a cross-sectional view and a plan view showing an alignment of liquid crystal molecules **31** in a white displaying state of the liquid crystal display device **200.**
[FIG. **11**] **(a)** and **(b)** are a cross-sectional view and a plan view showing an alignment of liquid crystal molecules **31** in a transparent displaying state of the liquid crystal display device **200.**
[FIG. **12**] A graph showing a relationship between time T(ms) and normalized luminance in a rise period and a fall period, as obtained through a simulation.
[FIG. **13**] A diagram showing equipotential lines and orientation directions of liquid crystal molecules **31** at 39 ms after start of a rise period (T = 49 ms), as obtained through a simulation.
[FIG. **14**] A graph showing relationships between time T(ms) and normalized luminance in a rise period and a fall period in two types of construction, as obtained through a simulation.
[FIG. **15**] **(a)** and **(b)** are a perspective view and a cross-sectional view schematically showing another construction for the liquid crystal display device **100.**
[FIG. **16**] A cross-sectional view schematically showing another construction for the liquid crystal display device **100.**
[FIG. **17**] A cross-sectional view schematically showing another construction for the liquid crystal display device **100.**
[FIG. **18**] A cross-sectional view schematically showing a liquid crystal display device **800** of Comparative Example, where **(a)** shows a state of black displaying and **(b)** shows a state of white displaying.
[FIG. **19**] A diagram schematically showing a doubling blur.

### DESCRIPTION OF EMBODIMENTS

Hereinafter, an embodiment of the present invention and comparative examples will be described with reference to the drawings. Note that the present invention is not limited to the following embodiments.

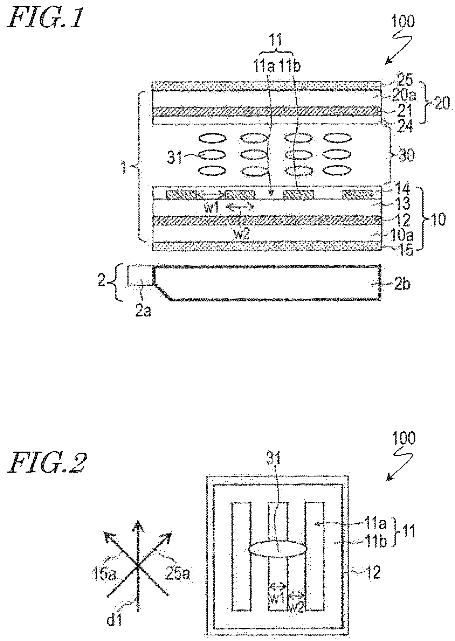

Comparative example FIG. **1** and FIG. **2** show a liquid crystal display device **100.** FIG. **1** is a cross-sectional view schematically showing the liquid crystal display device **100,** and FIG. **2** is a plan view schematically showing the liquid crystal display device **100.**

As shown in FIG. **1****,** the liquid crystal display device **100** includes a liquid crystal display panel **1** and an illumination element **2.** Moreover, the liquid crystal display device **100** includes a plurality of pixels arranged in a matrix array. FIG. **1** and FIG. **2** show an electrode structure corresponding to one pixel. As will be described later, the liquid crystal display device **100** performs multicolor displaying by the field sequential method.

The liquid crystal display panel **1** includes a first substrate **10** and a second substrate **20** opposing each other, and a liquid crystal layer **30** interposed between the first substrate **10** and the second substrate **20.** Hereinafter, between the first substrate **10** and the second substrate **20,** the first substrate **10** being positioned relatively on the rear face side will be referred to as the "rear substrate", and the second substrate **20** being positioned relatively on the front face side (the viewer's side) will be referred to as the "front substrate".

The rear substrate **10** includes a first electrode **11** provided for each of the plurality of pixels and a second electrode **12** which cooperates with the first electrode **11** to generate a lateral field across the liquid crystal layer **30.** Via an insulating layer **13,** the first electrode **11** is located on the second electrode **12.** Stated otherwise, the second electrode **12** is located under the first electrode **11** via the insulating layer **13.** Hereinafter, between the first electrode **11** and the second electrode **12,** the first electrode **11** taking a relatively upper position will be referred to as the "upper electrode", and the second electrode **12** taking a relatively lower position will be referred to as the "lower electrode". The lower electrode **12,** insulating layer **13,** and the upper electrode **11** are supported by an insulative transparent substrate (e.g., a glass substrate) **10a.**

As shown in FIG. **1** and FIG. **2****,** the upper electrode **11** includes a plurality of slit **11a** extending along a predetermined direction **d1,** and a plurality of branches **11b** extending in parallel to the direction **d1** that the slits **11a** extend. Note that the number of slits **11a** and the number of branches **11b** are not limited to those exemplified in FIG. **1** and FIG. **2****.** There is no particular limitation as to the width **w1** of the slits **11a.** The width **w1** of the slits **11a** is typically not less than 2 *µ*m and not more than 10 *µ*m. There is no particular limitation as to the width **w2** of the branches **11b,** either. The width **w2** of the branches **11b** is typically not less than 2 *µ*m and not more than 10 *µ*m. The upper electrode **11** is made of a transparent electrically conductive material (e.g., ITO).

The lower electrode **12** has no slits. That is, the lower electrode **12** is a so-called spread electrode. The lower electrode **12** is also made of a transparent electrically conductive material (e.g., ITO).

There is no particular limitation as to the material of the insulating layer **13.** As the material of the insulating layer **13,** for example, an inorganic material such as silicon oxide (SiO₂) or silicon nitride (SiN), or an organic material such as a photo-sensitive resin can be used.

The front substrate **20** includes a third electrode (hereinafter referred to as the "counter electrode") **21** which opposes the upper electrode (first electrode) **11** and the lower electrode (second electrode) **12.** The counter electrode **21** is supported by an insulative transparent substrate (e.g., a glass substrate) **20a.**

The counter electrode **21** generates a vertical field across the liquid crystal layer **30** in cooperation with the upper electrode **11** and the lower electrode **12.** The counter electrode **21** is made of a transparent electrically conductive material (e.g., ITO).

The liquid crystal layer **30** contains liquid crystal molecules **31** having positive dielectric anisotropy. Note that the orientation directions of the liquid crystal molecules **31** shown in FIG. **1** and FIG. **2** are those in a state where no voltage is applied to the liquid crystal layer **30.**

The liquid crystal display panel **1** further includes a pair of horizontal alignment films **14** and **24** which oppose each other via the liquid crystal layer **30.** One (which hereinafter may be referred to as the "first horizontal alignment film") **14** of the pair of horizontal alignment films **14** and **24** is formed on a surface of the rear substrate **10** that faces the liquid crystal layer **30.** The other (which hereinafter may be referred to as the "second horizontal alignment film") **24** of the pair of horizontal alignment films **14** and **24** is formed on a surface of the front substrate **20** that faces the liquid crystal layer **30.**

The first horizontal alignment film **14** and the second horizontal alignment film **24** have each been subjected to an alignment treatment, thus possessing an alignment regulating force that causes the liquid crystal molecules **31** in the liquid crystal layer **30** to be aligned in a predetermined direction (called a "pretilt direction"). As the alignment treatment, for example, a rubbing treatment or a photo-alignment treatment is conducted.

The pretilt direction defined by each of the first horizontal alignment film **14** and the second horizontal alignment film **24** is set so that the liquid crystal molecules **31** will take a homogeneous alignment in a state where no voltage is applied to the liquid crystal layer **30** (i.e., a state where no electric field is generated). Specifically, the pretilt direction defined by each of the first horizontal alignment film **14** and the second horizontal alignment film **24** is substantially orthogonal to the direction **d1** that the slits **11a** in the upper electrode **11** extend. In other words, the pretilt direction defined by the first horizontal alignment film **14** and the pretilt direction defined by the second horizontal alignment film **24** are parallel or antiparallel to each other.

Moreover, the liquid crystal display panel **1** further includes a pair of polarizing plates **15** and **25** which oppose each other via the liquid crystal layer **30.** A transmission axis (polarization axis) **15a** of one (which hereinafter may be referred to as the "first polarizing plate") **15** of the pair of polarizing plates **15** and **25** is substantially orthogonal to a transmission axis (polarization axis) **25a** of the other (which hereinafter may be referred to as the "second polarizing plate") **25,** as shown in FIG. **2****.** In other words, the first polarizing plate **15** and the second polarizing plate **25** are placed in crossed Nicols. In the present example the respective transmission axes **15a** and **25a** of the first polarizing plate **15** and the second polarizing plate **25** constitute angles of substantially 45° with respect to the pretilt directions which are respectively defined by the first horizontal alignment film **14** and the second horizontal alignment film **24.** Therefore, the respective transmission axes **15a** and **25a** of the first polarizing plate **15** and the second polarizing plate **25** constitute angles of substantially 45° with respect to the direction **d1** that the slits **11a** in the upper electrode **11** extend.

The illumination element (referred to as the "backlight") **2** is located on the rear face side of the liquid crystal display panel **1.** The illumination element **2** is able to switchably irradiate the liquid crystal display panel **1** with a plurality of color rays including red light, green light, and blue light.

As the illumination element **2,** for example, an edgelight-type backlight such as that shown in FIG. **1** can be used. The edgelight-type backlight **2** includes a light source unit **2a** and a light guide plate **2b.** The light source unit **2a** is capable of emitting a plurality of color rays including red light, green light, and blue light. For example, the light source unit **2a** includes a red LED, a green LED, and a blue LED. The light guide plate **2b** guides color rays which are emitted from the light source unit **2a** to the liquid crystal display panel **1.**

The liquid crystal display device **100** performs multicolor displaying by the field sequential method. Therefore, the liquid crystal display panel **1** lacks color filters.

When a predetermined voltage is applied between the upper electrode **11** and the lower electrode **12** (i.e., a predetermined potential difference is introduced therebetween), a lateral field (fringing field) is generated across the liquid crystal layer **30.** A "lateral field" is an electric field containing a component which is substantially parallel to the substrate plane. The direction of the lateral field which is generated by the upper electrode **11** and the lower electrode **12** is substantially orthogonal to the direction **d1** that the slits **11a** in the upper electrode **11** extend.

When a predetermined voltage is applied between the counter electrode **21** and the upper electrode **11** and lower electrode **12** (i.e., a predetermined potential difference is introduced therebetween), a vertical field is generated. A "vertical field" is an electric field whose direction is substantially parallel to the substrate-plane normal direction.

The liquid crystal display device **100** is constructed so that the intensities of the lateral field and the vertical field can be controlled with respect to each pixel. Typically, the liquid crystal display device **100** is constructed so that a voltage differing from pixel to pixel can be respectively supplied for the upper electrode **11** and the lower electrode **12.** Specifically, both the upper electrode **11** and the lower electrode **12** are formed in isolated pieces corresponding to pixels, such that each pixel has a switching element (e.g., a thin film transistor; not shown) electrically connected to the upper electrode **11** and a switching element (e.g., a thin film transistor; not shown) electrically connected to the lower electrode **12.** A predetermined voltage is supplied to each of the upper electrode **11** and the lower electrode **12** via a corresponding switching element. Moreover, the counter electrode **21** is formed as a single electrically conductive film that is continuous across all pixels. Therefore, a common potential is applied to the counter electrode **21** for all pixels.

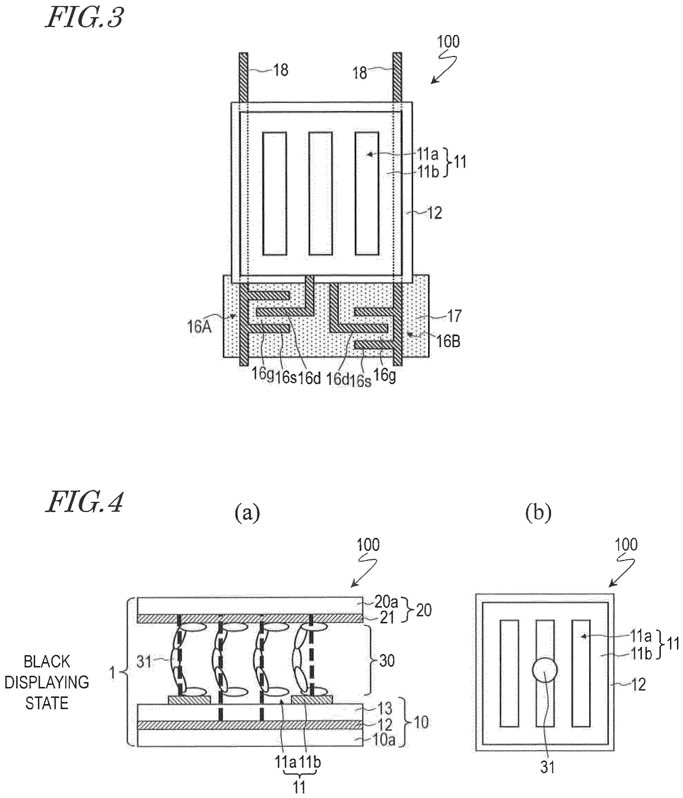

FIG. **3** shows an exemplary of a specific wiring structure for the rear substrate **10.** In the construction shown in FIG. **3****,** a first TFT **16A** corresponding to the upper electrode **11** and a second TFT **16B** corresponding to the lower electrode **12** are provided for each pixel. The respective gate electrodes **16g** of the first TFT **16A** and the second TFT **16B** are electrically connected to a gate bus line (scanning line) **17.** Herein, the portions of the gate bus line **17** that overlap the channel regions of the first TFT **16A** and the second TFT **16B** function as the gate electrodes **16g.** Respective source electrodes **16s** of the first TFT **16A** and the second TFT **16B** are electrically connected to source bus lines (signal lines) **18.** Herein, portions branching out from the source bus lines **18** function as the source electrodes **16s.** A drain electrode **16d** of the first TFT **16A** is electrically connected to the upper electrode **11.** On the other hand, a drain electrode **16d** of the second TFT **16B** is electrically connected to the lower electrode **12.** Note that the wiring structure of the rear substrate **10** is not limited to what is exemplified in FIG. **3****.**

In the liquid crystal display device **100,** each of the plurality of pixels is able to switchably present: a "black displaying state", where black displaying is performed with a vertical field being generated across the liquid crystal layer **30;** a "white displaying state", where white displaying is performed with a lateral field being generated across the liquid crystal layer **30;** or a "transparent displaying state", where the rear face side (i.e., the background) of the liquid crystal display panel **1** is visible in a see-through manner with no voltage being applied to the liquid crystal layer **30.**

Hereinafter, with reference to FIG. **4****,** FIG. **5,** and FIG. **6****,** the black displaying state, the white displaying state, and the transparent displaying state will be described in more detail.

FIGS. **4(a)** and **(b)** show an alignment of liquid crystal molecules **31** in a black displaying state. In the black displaying state, a predetermined voltage is applied between the counter electrode **21** and the upper electrode **11** and lower electrode **12** (e.g., a potential of 0 V being given to the counter electrode **21** and a potential of 7.5 V being given to the upper electrode **11** and lower electrode **12**), whereby a vertical field is generated across the liquid crystal layer **30.** FIG. **4(a)** schematically shows the electric lines of force in this state with broken lines.

In this black displaying state, as shown in FIGS. **4(a)** and **(b),** the liquid crystal molecules **31** in the liquid crystal layer **30** are aligned substantially vertically to the substrate plane (the surfaces of the rear substrate **10** and the front substrate **20**) (i.e., substantially parallel to the layer normal direction of the liquid crystal layer **30**). Note that the liquid crystal molecules (which may also be referred to as "interfacial liquid crystal") **31** in the close neighborhood of the first horizontal alignment film **14** and the second horizontal alignment film **24** are strongly affected by the alignment regulating forces of the first horizontal alignment film **14** and the second horizontal alignment film **24,** and therefore remain aligned substantially parallel to the substrate plane. However, since the liquid crystal molecules (which may also be referred to as "bulk liquid crystal") **31** in the other regions (i.e., a greater region of the liquid crystal layer **30**) are aligned substantially vertically to the substrate plane, black displaying can be attained without problems.

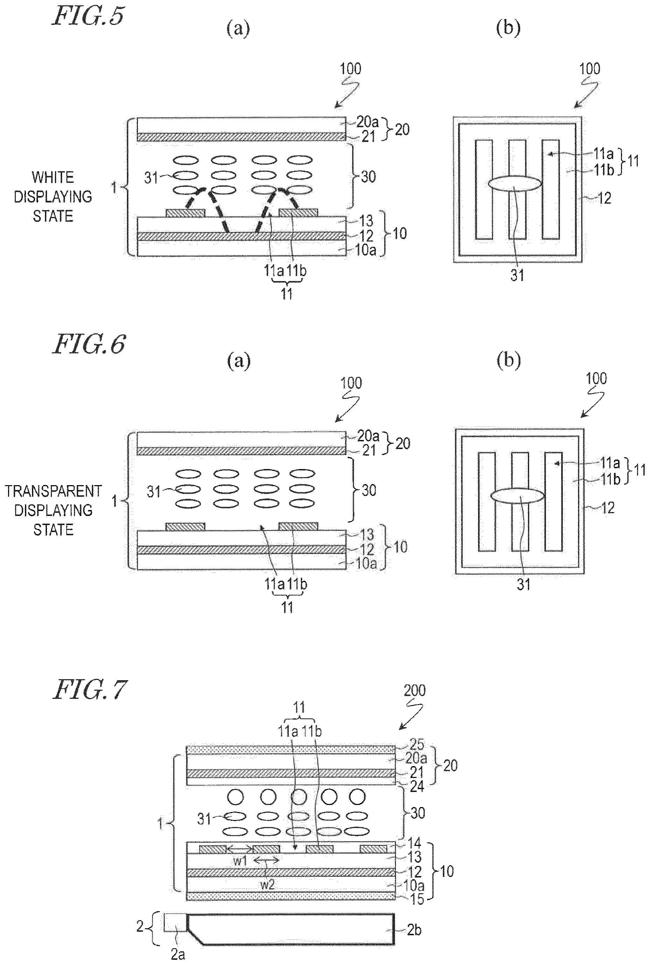

FIGS. **5(a)** and **(b)** show an alignment of liquid crystal molecules **31** in a white displaying state. In the white displaying state, a predetermined voltage is applied between the upper electrode **11** and the lower electrode **12** (e.g., a potential of 0 V being given to the upper electrode **11** and the counter electrode **21,** and a potential of 7.5 V being given to the lower electrode **12**), whereby a lateral field (fringing field) is generated across the liquid crystal layer **30.** FIG. **5(a)** schematically shows the electric lines of force in this state with broken lines.

In this white displaying state, as shown in FIGS. **5(a)** and **(b),** the liquid crystal molecules **31** in the liquid crystal layer **30** are aligned substantially in parallel to the substrate plane (i.e., substantially vertically to the layer normal direction of the liquid crystal layer **30**). More specifically, the liquid crystal molecules **31** are aligned so as to be substantially orthogonal to the direction **d1** that the slits **11a** in the upper electrode **11** extend. In other words, the liquid crystal molecules **31** are aligned so as to constitute an angle of substantially 45° with respect to the respective transmission axes **15a** and **25a** of the first polarizing plate **15** and the second polarizing plate **25.**

FIGS. **6(a)** and **(b)** shows an alignment of liquid crystal molecules **31** in a transparent displaying state. In the transparent displaying state, no voltage is applied to the liquid crystal layer **30** (e.g., a potential of 0 V is given to all of the upper electrode **11,** the lower electrode **12,** and the counter electrode **21**), so that neither a vertical field nor a lateral field is generated across the liquid crystal layer **30.**

In this transparent displaying state, as shown in FIGS. **6(a)** and **(b),** the liquid crystal molecules **31** in the liquid crystal layer **30** take a homogeneous alignment. In other words, the liquid crystal molecules **31** are aligned substantially in parallel to the substrate plane (i.e., substantially vertically to the layer normal direction of the liquid crystal layer **30**). More specifically, liquid crystal molecules **31** are aligned so as to be substantially orthogonal to the direction **d1** that the slits **11a** in the upper electrode **11** extend. In other words, the liquid crystal molecules **31** are aligned so as to constitute an angle of substantially 45° with respect to the respective transmission axes **15a** and **25a** of the first polarizing plate **15** and the second polarizing plate **25.** The light transmittance of each pixel of the liquid crystal display device **100** is the highest in this transparent displaying state (i.e., higher than those in the black displaying state and the white displaying state).

As described above, the liquid crystal display device **100** performs multicolor displaying by the field sequential method, so that the liquid crystal display panel **1** does not need color filters. Therefore, the efficiency of light utilization is improved. Moreover, in the liquid crystal display device **100,** a vertical field is generated across the liquid crystal layer **30** in the black displaying state and a lateral field is generated across the liquid crystal layer **30** in the white displaying state; therefore, torque due to voltage application can act on the liquid crystal molecules **31** in both a fall (i.e., a transition from the white displaying state to the black displaying state) and a rise (i.e., a transition from the black displaying state to the white displaying state). As a result, good response characteristics are attained.

Furthermore, in the liquid crystal display device **100,** each pixel is capable of presenting not only the black displaying state and the white displaying state, but also a transparent displaying state, which is a state where no voltage is applied to the liquid crystal layer **30.** By displaying the background in this transparent displaying state, it becomes possible to prevent the problem of background blur (it being perceived as double images). Hereinafter, the reasons why this problem (doubling blur) occurs in the liquid crystal display devices of Patent Documents 1 to 3 will be described with reference to a liquid crystal display device according to Comparative Example.

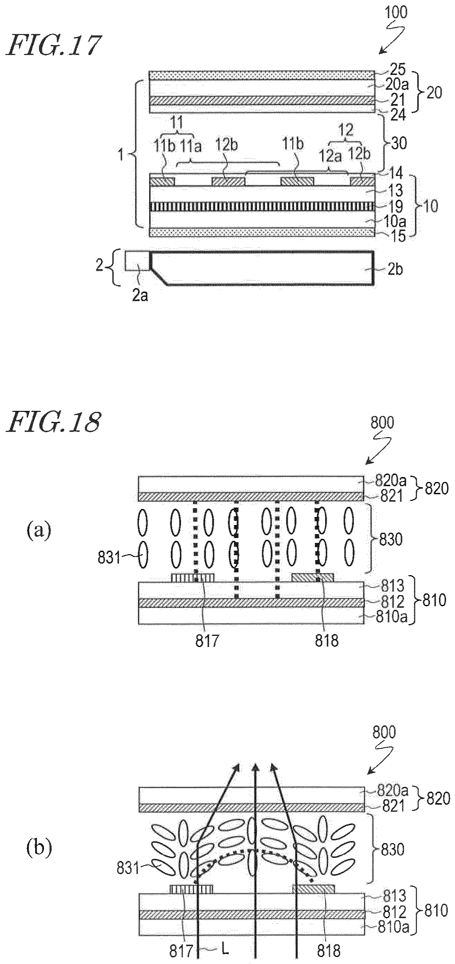

FIGS. **18(a)** and **(b)** show a state of black displaying and a state of white displaying conducted by the liquid crystal display device **800** of Comparative Example, respectively. The liquid crystal display device **800** of Comparative Example has the same construction as that of the liquid crystal display device shown in FIG. 1 and FIG. 2 of Patent Document 3.

The liquid crystal display device **800** includes an array substrate **810** and a counter substrate **820,** and a liquid crystal layer **830** provided therebetween. The array substrate **810** includes: a glass substrate **810a;** and a lower electrode **812,** an insulating layer **813,** and a pair of interdigitated electrodes (upper electrode) **817** and **818,** these being stacked in this order on the glass substrate **810a.** On the other hand, the counter substrate **820** includes a substrate **820a** and a counter electrode **821** formed on the glass substrate **820a.**

The liquid crystal layer **830** contains liquid crystal molecules **831** having positive dielectric anisotropy. In the liquid crystal display device **800,** the liquid crystal molecules **831** in the liquid crystal layer **830** take a vertical alignment in the absence of an applied voltage.

In the liquid crystal display device **800** of Comparative Example, when conducting black displaying, a predetermined voltage is applied between the counter electrode **821,** the lower electrode **812,** and the upper electrode (a pair of interdigitated electrodes) **817, 818** (e.g., a potential of 7V being given to the counter electrode **821,** and a potential of 14 V being given to the lower electrode **812** and the upper electrode **817, 818**), thereby generating a vertical field across the liquid crystal layer **830.** As a result, the liquid crystal molecules **831** are aligned substantially vertically to the substrate plane as shown in FIG. **18(a)****.**

Moreover, in the liquid crystal display device **800** of Comparative Example, when conducting white displaying, a predetermined voltage is applied between the pair of interdigitated electrodes **817** and **818** (e.g., a potential of 0 V being given to one interdigitated electrode **817** and a potential of 14 V given to the other interdigitated electrode **818**), thereby generating a lateral field across the liquid crystal layer **830.** As a result, as shown in FIG. **18(b)****,** the liquid crystal molecules **831** take an inclined alignment with respect to the substrate-plane normal direction.

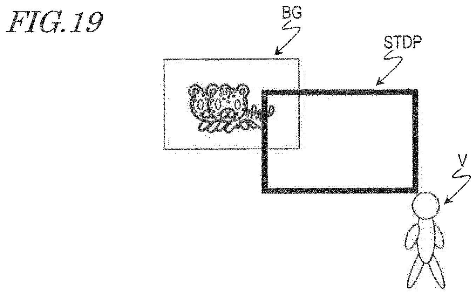

In the case where the liquid crystal display device **800** of Comparative Example is simply used for a see-through display, if see-through displaying were to be conducted, i.e., when conducting displaying such that the background is visible in a see-through manner, the white displaying state will be utilized, which is a state under high pixel light transmittance. However, the state for conducting white displaying is a state in which the liquid crystal molecules **830** are aligned by applying a voltage across the liquid crystal layer **830,** so that a refractive index distribution occurs within the pixel. Therefore, light **L** from the rear face side is scattered due to this refractive index distribution (i.e., the direction of travel of the light **L** changes; see FIG. **18(b)**), thus blurring the background. Consequently, as shown in FIG. **19****,** a viewer **V** observing the background **BG** via the see-through display **STDP** will perceive the background **BG** as double images.

Thus, doubling blur will occur when see-through displaying is conducted in the white displaying state, which is a state where voltage is applied across the liquid crystal layer **30.** On the other hand, in the liquid crystal display device **100,** the background (see-through displaying) is displayed in pixels which are in a state where no voltage is applied to the liquid crystal layer **30** (transparent displaying state), whereby doubling blur is prevented, and the quality of see-through displaying can be improved.

Note that, if the white displaying state of the liquid crystal display device **100** is used for see-through displaying, doubling blur will similarly occur. The reason is that, in the white displaying state, a refractive index distribution occurs within the pixel under the influence of the electric field being generated in the liquid crystal layer **30.** While FIG. **5(a)** shows an ideal alignment, in actuality, the liquid crystal molecules **31** in the white displaying state will not take a uniform homogeneous alignment, unlike in the transparent displaying state; therefore, a lower transmittance than that in the transparent displaying state will result. Moreover, in the liquid crystal display device **800** of Comparative Example, see-through displaying cannot be attained in a state where no voltage is applied to the liquid crystal layer **830,** because of low light transmittance (essentially the same transmittance as in a state of black displaying).

As described above, the liquid crystal display device **100** excels in both response characteristics and display quality, and thus is suitably used as a see-through display.

Note that each of the plurality of pixels of the liquid crystal display device **100** is able to present an "intermediate level displaying state" of presenting a luminance corresponding to an intermediate gray scale level, in addition to the black displaying state of presenting a luminance corresponding to the lowest gray scale level, the white displaying state of presenting a luminance corresponding to the highest gray scale level, and the transparent displaying state of conducting see-through displaying. In an intermediate level displaying state, desired transmittance can be realized by adjusting the intensity of the lateral field (fringing field) to be generated across the liquid crystal layer **30** (e.g., a potential of 0 V being given to the counter electrode **21** and that of 7.5 V being given to the lower electrode **12,** and a potential which is greater than 0 V and less than 7.5 V being given to the upper electrode **11**). It will be appreciated that the relationship between the potentials to be given to the upper electrode **11** and the lower electrode **12** is not limited to what is exemplified herein. For example, intermediate level displaying may be realized with a fixed potential given to the upper electrode **11** and a variable potential given to the lower electrode **12.**

In the liquid crystal display device **100,** when conducting displaying such that information which is displayed by the liquid crystal display panel **1** is overlaid on the background, the pixels in the portion of the displaying region where information is to be displayed present either the black displaying state, the white displaying state, or an intermediate level displaying state, whereas the pixels in any other portion present the transparent displaying state. These displaying states can be switched in the following manner, for example.

A driving circuit for a generic liquid crystal display device includes an 8-bit driver IC, and generates output voltages corresponding to 256 gray scale levels (0^{th} to 255^{th} gray scale levels). In a generic liquid crystal display device, the 0^{th} gray scale level is assigned to the black displaying state; the 1^{st} to 254^{th} gray scale levels are assigned to intermediate level displaying states; and the 255^{th} gray scale level is assigned to the white displaying state.

In the liquid crystal display device **100,** for example, the 0^{th} gray scale level may be assigned to the transparent displaying state, the 1^{st} gray scale level may be assigned to the black displaying state, the 2^{nd} to 254^{th} gray scale levels may be assigned to intermediate level displaying states, and the 255^{th} gray scale level assigned to the white displaying state, thereby being able to switch between the black displaying state, intermediate level displaying states, the white displaying state, and the transparent displaying state. Note that it is not necessary for the transparent displaying state to be associated with the 0^{th} gray scale level, and any gray scale level may be assigned to the transparent displaying state. In cases other than displaying in 256 gray scale levels exemplified herein, too, a specific gray scale level may be assigned to the transparent displaying state.

As described above, in the liquid crystal display device **100,** each pixel is capable of switchably presenting the black displaying state, the white displaying state, or the transparent displaying state. In any conventional see-through display, regardless of its type (liquid crystal display device, PDLC display, organic EL display, etc.), see-through displaying will need to be performed in either the black displaying state or the white displaying state (i.e., the gray scale level for either the black displaying state or the white displaying state being assigned to see-through displaying), and thus see-through displaying cannot be performed with an applied voltage that differs from those of the black displaying state and the white displaying state. On the other hand, in the liquid crystal display device **100,** each pixel is able to present not only the black displaying state and the white displaying state, but also the transparent displaying state, with an applied voltage which differs from those of the black displaying state and the white displaying state, whereby doubling blur is prevented.

### (Embodiment)

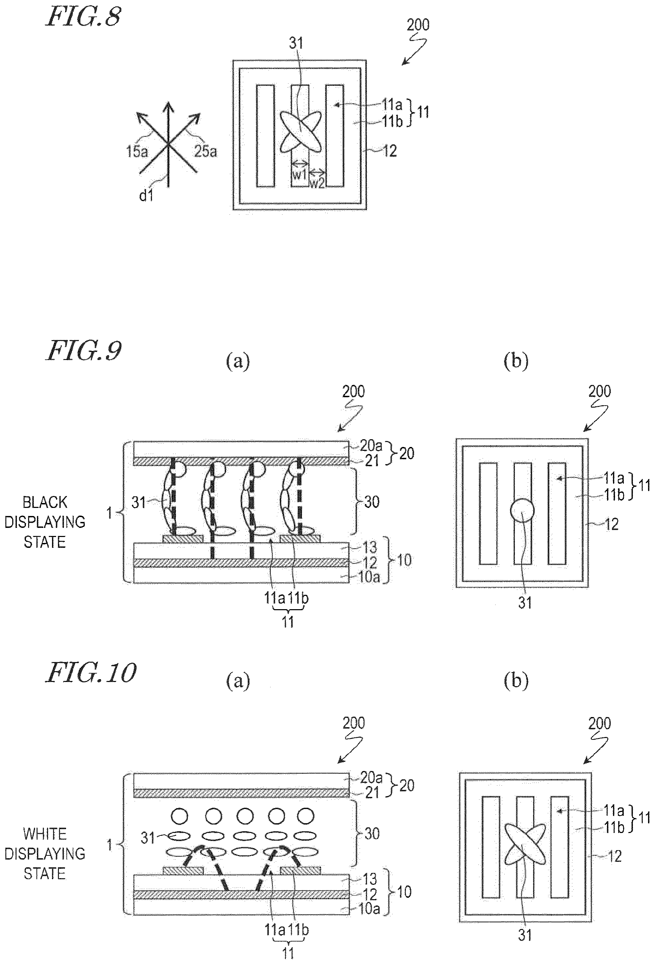

FIG. **7** and FIG. **8** show a liquid crystal display device **200** according to the present embodiment. FIG. **7** is a cross-sectional view schematically showing the liquid crystal display device **200,** and FIG. **8** is a plan view schematically showing the liquid crystal display device **200.**

The liquid crystal display device **200** differs from the liquid crystal display device **100** of the comparative example in that the liquid crystal molecules **31** take a twist alignment in a state where no voltage is applied to the liquid crystal layer **30** (i.e., a state where no electric field is generated).

Pretilt directions which are respectively defined by the first horizontal alignment film **14** and the second horizontal alignment film **24** of the liquid crystal display device **200** constitute angles of substantially 45° with respect to the direction **d1** that the slits **11a** in the upper electrode **11** extend. Moreover, the pretilt direction defined by second horizontal alignment film **24** constitutes an angle of 90° with respect to the pretilt direction defined by the first horizontal alignment film **14.** Therefore, in a state where no voltage is applied to the liquid crystal layer **30,** the liquid crystal molecules **31** take a 90° twist alignment.

Moreover, the first polarizing plate **15** and the second polarizing plate **25** are placed in crossed Nicols, such that the respective transmission axes **15a** and **25a** of the first polarizing plate **15** and the second polarizing plate **25** are substantially parallel or substantially orthogonal to the pretilt directions respectively defined by the first horizontal alignment film **14** and the second horizontal alignment film **24.** Therefore, the respective transmission axes **15a** and **25a** of the first polarizing plate **15** and the second polarizing plate **25** constitute angles of substantially 45° with respect to the direction **d1** that the slits **11a** in the upper electrode **11** extend.

In the liquid crystal display device **200** of the present embodiment, too, each of the plurality of pixels is able to switchably present the black displaying state, the white displaying state, or the transparent displaying state. Hereinafter, with reference to FIG. **9,** FIG. **10****,** and FIG. **11****,** the black displaying state, the white displaying state, and the transparent displaying state will be described in more detail.

FIGS. **9(a)** and **(b)** show an alignment of liquid crystal molecules **31** in the black displaying state. In the black displaying state, a predetermined voltage is applied between the counter electrode **21,** the upper electrode **11,** and the lower electrode **12** (e.g., a potential of 0 V being given to the counter electrode **21,** and a potential of 7.5 V being given to the upper electrode **11** and the lower electrode **12**), thereby generating a vertical field across the liquid crystal layer **30.** FIG. **9(a)** schematically shows the electric lines of force in this state with broken lines.

In this black displaying state, as shown in FIGS. **9(a)** and **(b),** the liquid crystal molecules **31** in the liquid crystal layer **30** are aligned substantially vertically to the substrate plane (the surfaces of the rear substrate **10** and the front substrate **20**) (that is, substantially parallel to the layer normal direction of the liquid crystal layer **30**). Note that the liquid crystal molecules **31** in the close neighborhood of the first horizontal alignment film **14** and the second horizontal alignment film **24** are strongly affected by the alignment regulating forces of the first horizontal alignment film **14** and the second horizontal alignment film **24,** and therefore remain aligned substantially parallel to the substrate plane. However, since these liquid crystal molecules **31** are substantially parallel or substantially orthogonal to the transmission axis **15a** of the first polarizing plate **15,** they hardly confer any phase difference to the light passing through the first polarizing plate **15** and entering the liquid crystal layer **30,** and thus hardly lower the contrast ratio.

FIGS. **10(a)** and **(b)** show an alignment of liquid crystal molecules **31** in the white displaying state. In the white displaying state, a predetermined voltage is applied between the upper electrode **11** and the lower electrode **12** (e.g., a potential of 0 V being given to the upper electrode **11** and the counter electrode **21,** and a potential of 7.5 V being given to the lower electrode **12**), thereby generating a lateral field (fringing field) across the liquid crystal layer **30.** FIG. **10(a)** schematically shows the electric lines of force in this state with broken lines.

In this white displaying state, as shown in FIGS. **10(a)** and **(b),** the liquid crystal molecules **31** in the liquid crystal layer **30** are aligned substantially in parallel to the substrate plane (i.e., substantially vertically to the layer normal direction of the liquid crystal layer **30**). More specifically, the liquid crystal molecules **31** in the neighborhood of first horizontal alignment film **14** and the liquid crystal molecules **31** in the neighborhood of second horizontal alignment film **24** are aligned so as to constitute an angle of substantially 90°, whereby the liquid crystal molecules **31** near the center along the thickness direction of the liquid crystal layer **30** are aligned substantially parallel to the direction **d1** that the slits **11a** in the upper electrode **11** extend. Therefore, an average orientation direction of the bulk liquid crystal is substantially parallel to the direction **d1** that the slits **11a** extend (i.e., constituting an angle of substantially 45° with respect to the respective transmission axes **15a** and **25a** of the first polarizing plate **15** and the second polarizing plate **25**).

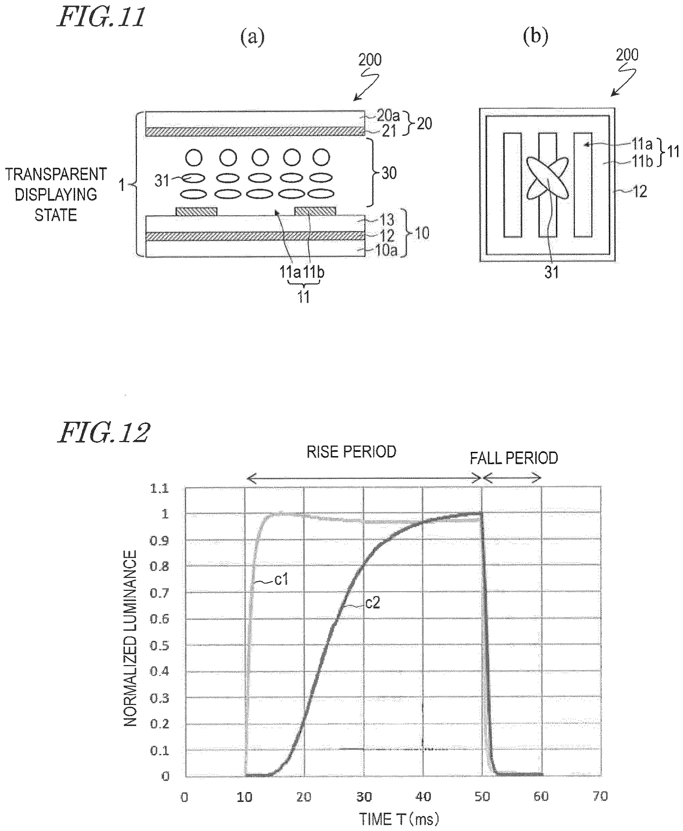

FIGS. **11(a)** and **(b)** show an alignment of liquid crystal molecules **31** in the transparent displaying state. In the transparent displaying state, no voltage is applied to the liquid crystal layer **30** (e.g., a potential of 0 V is given to all of the upper electrode **11,** the lower electrode **12,** and the counter electrode **21**), so that neither a vertical field nor a lateral field is generated across the liquid crystal layer **30.**

In this transparent displaying state, the liquid crystal molecules **31** in the liquid crystal layer **30** take a twist alignment, as shown in FIGS. **11(a)** and **(b).** In other words, the liquid crystal molecules **31** are aligned substantially in parallel to the substrate plane (i.e., substantially vertically to the layer normal direction of the liquid crystal layer **30**). The liquid crystal molecules **31** in the neighborhood of first horizontal alignment film **14** and the liquid crystal molecules **31** in the neighborhood of second horizontal alignment film **24** are aligned so as to constitute an angle of substantially 90°, whereby the liquid crystal molecules **31** near the center along the thickness direction of the liquid crystal layer **30** are aligned substantially parallel to the direction **d1** that the slits **11a** in the upper electrode **11** extend. Therefore, an average orientation direction of the liquid crystal molecules **31** in the bulk liquid crystal are substantially parallel to the direction **d1** that the slits **11a** extend (i.e., constituting an angle of substantially 45° with respect to the respective transmission axes **15a** and **25a** of the first polarizing plate **15** and the second polarizing plate **25**). The light transmittance of each pixel of the liquid crystal display device **200** is the highest in this transparent displaying state (i.e., higher than those in the black displaying state and the white displaying state).

As described above, in the liquid crystal display device **200** of the present embodiment, a vertical field is generated across the liquid crystal layer **30** in the black displaying state and a lateral field is generated across the liquid crystal layer **30** in the white displaying state; therefore, torque due to voltage application can act on the liquid crystal molecules **31** in both a fall (i.e., a transition from the white displaying state to the black displaying state) and a rise (i.e., a transition from the black displaying state to the white displaying state). As a result, good response characteristics are attained.

Moreover, in the liquid crystal display device **200** of the present embodiment, each pixel is capable of presenting not only the black displaying state and the white displaying state, but also the transparent displaying state, which is a state where no voltage is applied to the liquid crystal layer **30.** By displaying the background in this transparent displaying state, it becomes possible to prevent doubling blur, thereby improving the quality of see-through displaying similarly to the liquid crystal display device **100** of the comparative example.

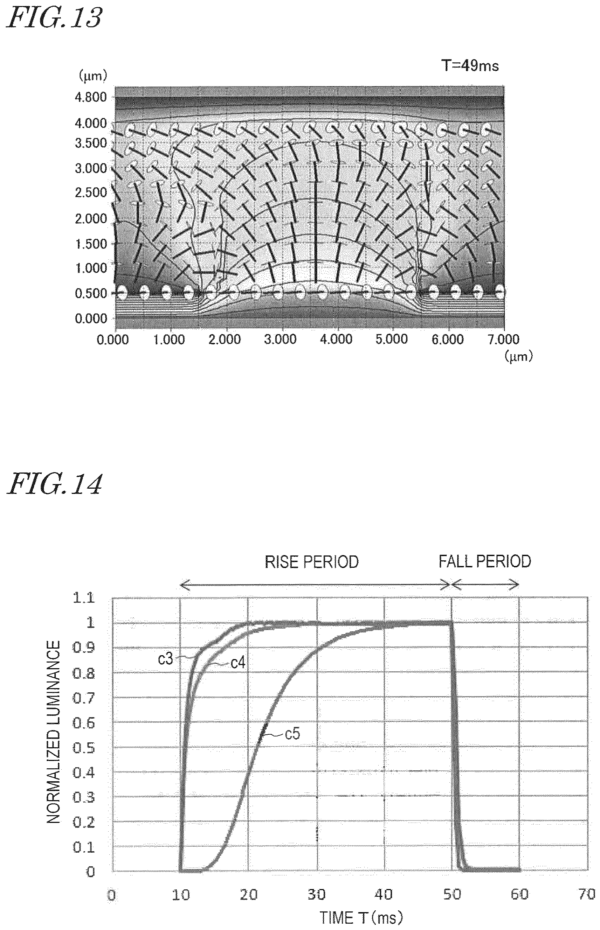

Note that, if the white displaying state of the liquid crystal display device **200** is used for see-through displaying, doubling blur will similarly occur. The reason is that, in the white displaying state, a refractive index distribution occurs within the pixel under the influence of the electric field being generated in the liquid crystal layer **30.** While FIG. **10(a)** shows an ideal alignment, in actuality, the liquid crystal molecules **31** in the white displaying state will not take a uniform twist alignment, unlike in the transparent displaying state (see FIG. **13** described later); therefore, a lower transmittance than that in the transparent displaying state will result.

As described above, the liquid crystal display device **100** of the present embodiment excels in both response characteristics and display quality, and thus is suitably used as a see-through display.

Now, a simulated estimation of the effect of response speed improvement resulting from voltage application during white displaying will be discussed. As simulation software, LCD MASTER 2D (manufactured by SHINTECH, Inc.) was used for the simulation. The cell thickness (i.e., thickness of the liquid crystal layer **30**) was 3.5 *µ*m, and the insulating layer **13** had a resin layer with a thickness of 1 *µ*m and a dielectric constant ε of 3.4 and a passivation layer with a thickness of 0.3 *µ*m and a dielectric constant ε of 6.9, these being stacked. The branches **11b** of the upper electrode **11** had a width **w2** of 3 *µ*m and the slits **11a** had a width **w1** of 4 *µ*m (i.e., L/S=3 *µ*m /4 *µ*m). Furthermore, the pretilt directions respectively defined by the first horizontal alignment film **14** and the second horizontal alignment film **24** constituted angles of 45° with respect to the direction **d1** that the slits **11a** in the upper electrode **11** extended.

FIG. **12** and FIG. **13** show results of the simulation. FIG. **12** shows a relationship (curve **c1)** between time T (ms) and normalized luminance in a rise period (a transitional period from the black displaying state to the white displaying state: T = 10 to 50 ms) and a fall period (a transitional period from the white displaying state to the black displaying state: T = 50 ms to 60 ms). For comparison's sake, FIG. **12** also shows a relationship (curve **c2**) between time T(ms) and normalized luminance in a transitional period (T = 10 to 50 ms) from the black displaying state to the absence of an applied voltage (transparent displaying state) and a transitional period (T = 50 ms to 60 ms) from the absence of an applied voltage (transparent displaying state) to the black displaying state. FIG. **13** shows equipotential lines and orientation directions of the liquid crystal molecules **31** at 39 ms after start of a rise period (T = 49 ms).

As can be seen from FIG. **12****,** in a transition from the black displaying state to the white displaying state (i.e., a lateral field being generated across the liquid crystal layer **30**), the increase in normalized luminance is more rapid than in a transition from the black displaying state to the absence of an applied voltage (i.e., no electric field being generated across the liquid crystal layer **30**), indicative of an improved response speed. Specifically, the response time in the former case (i.e., the time needed for the normalized luminance to change from 0.1 to 0.9, called the rise response time *τ* r) is 2.2 ms, whereas the response time in the latter case (the time needed for the normalized luminance to change from 0.1 to 0.9) is 16.2 ms. The response time in a transition from the white displaying state to the black displaying state (the time needed for the normalized luminance to change from 0.9 to 0.1, called the fall response time *τ* d) and the response time (the time needed for the normalized luminance to change from 0.9 to 0.1) in a transition from the transparent displaying state to the black displaying state are both about 2.0 ms, i.e., essentially the same.

Moreover, from a comparison between the normalized luminance in the white displaying state and the normalized luminance in the transparent displaying state (comparison at the point T=50 ms), it can be seen that the light transmittance is higher in the transparent displaying state than in the white displaying state. When conducting multicolor displaying by the field sequential method, good response characteristics are expected of the white displaying state, even somewhat at the cost of light transmittance. On the other hand, the transparent displaying state is expected to provide a high light transmittance, rather than good response characteristics. This means that realizing the white displaying state by voltage application and realizing the transparent displaying state by absence of an applied voltage, as in the liquid crystal display device **200** of the present embodiment (or the liquid crystal display device), is very suitable for a see-through display under the field sequential method.

Note that the present embodiment illustrates an exemplary construction where, in the white displaying state, the liquid crystal molecules **31** near the center along the thickness direction of the liquid crystal layer **30** are aligned substantially parallel to the direction **d1** that the slits **11a** in the upper electrode **11** extend (i.e., an average orientation direction of the bulk liquid crystal is substantially parallel to the direction **d1** that the slits **11a** extend) (hereinafter referred to as "Construction 1"). On the other hand, another construction may also be adopted where, in the white displaying state, the liquid crystal molecules **31** near the center along the thickness direction of the liquid crystal layer **30** are aligned so as to be substantially orthogonal to the direction **d1** that the slits **11a** in the upper electrode **11** extend (i.e., an average orientation direction of the bulk liquid crystal is substantially orthogonal to the direction **d1** that the slits **11a** extend) (hereinafter referred to as "Construction 2"). However, the inventors have conducted a simulation study to find that, from the standpoint of attaining further improvements in response characteristics, it is more preferable to adopt Construction 1 (of course, Construction 2 may instead be adopted).

FIG. **14** shows a relationship between time T(ms) and normalized luminance in a rise period (T = 10 to 50 ms) and a fall period (T = 50 ms to 60 ms), with respect to both Construction 1 (curve **c3**) and Construction 2 (curve **c4**). For reference's sake, FIG. **13** also shows a relationship (curve **c5**) between time T(ms) and normalized luminance in a transitional period (T = 10 to 50 ms) from the black displaying state to the absence of an applied voltage (transparent displaying state) and a transitional period (T = 50 ms to 60 ms) from the absence of an applied voltage (transparent displaying state) to the black displaying state.

As can be seen from FIG. **14****,** when Construction 1 is adopted, the increase in normalized luminance is more rapid than when Construction 2 is adopted, indicative of a further improved response speed. Thus, from the standpoint of response characteristics, it is preferable to adopt Construction 1.

As described above, according to embodiments of the present invention, the response characteristics and display quality of a liquid crystal display device for use as a see-through display can be improved. Note that, the specific construction of a liquid crystal display device according to an embodiment of the present invention is not limited to what is exemplified in the embodiment.

Although FIG. **1** and FIG. **6** illustrate a construction in which an edgelight-type backlight is disposed as the illumination element **2** on the rear face side of the liquid crystal display panel **1** so as to overlap the liquid crystal display panel **1,** the illumination element **2** is not to be limited to this example.

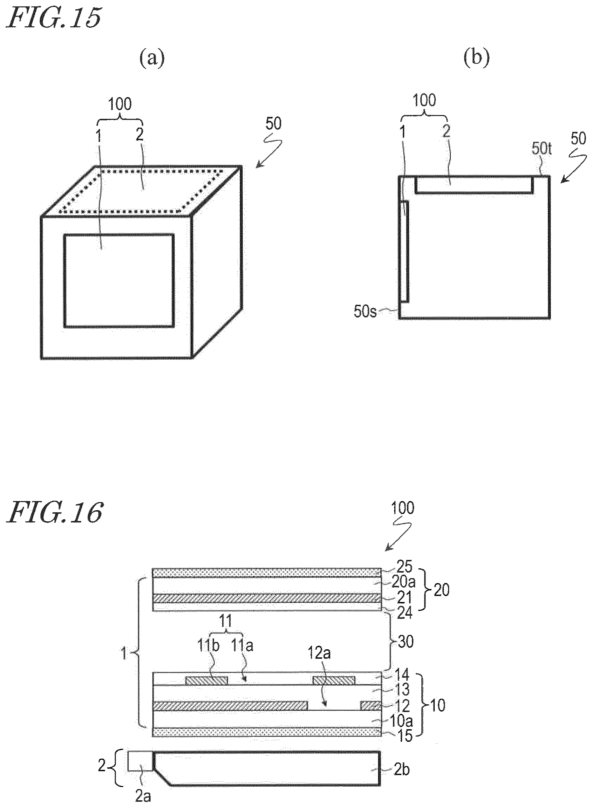

For example, a construction shown in FIG. **15** may be adopted. In the construction shown in FIG. **15****,** the liquid crystal display panel **1** and the illumination element **2** of the liquid crystal display device **100** are attached on a transparent case **50** of a box shape. The case **50** having the liquid crystal display panel **1** and the illumination element **2** attached thereto is used as a showcase, for example.

The liquid crystal display panel **1** is attached to a side face **50s,** among a plurality of side faces of the case **50.** The illumination element **2** is attached to an upper face **50t** of the case **50.** In a manner described above, the illumination element **2** is capable of switchably irradiating the liquid crystal display panel **1** with a plurality of color rays including red light, green light, and blue light. From the standpoint of enhancing the efficiency of light utilization (i.e., allowing as much light from the illumination element **2** to enter the liquid crystal display panel **1** as possible), it is preferable that the inner surface of the case **50** has a light diffusing property.

Moreover, the electrode structure is not limited to what is exemplified in FIG. **1** and the like, either. For example, electrode structures shown in FIG. **16** and FIG. **17** may be adopted. The example shown in FIG. **16** differs from the example shown in FIG. **1** in that the lower electrode (second electrode) **12** has slits **12a.** An electrode structure in which the lower electrode has slits is disclosed in International Publication No. 2013/001980. Since the lower electrode **12** has the slits **12a,** as is described in International Publication No. 2013/001980, further improvements in response characteristics and light transmittance can be made.

In the example shown in FIG. **17****,** a fourth electrode **19** is provided as the lower electrode. On this fourth electrode (lower electrode) **14,** a first electrode **11** and a second electrode **12** are provided as the upper electrode, via an insulating layer **13.**

The first electrode **11** is of an interdigitated shape, including a plurality of slits **11a** and a plurality of branches **11b.** The second electrode **12** is also of an interdigitated shape, including a plurality of slits **12a** and a plurality of branches **12b.** The branches **11b** of the first electrode **11** are located within the slits **12a** of the second electrode **12,** and branches **12b** of the second electrode **12** are located within the slits **11a** of the first electrode **11.** That is, the interdigitated first electrode **11** and second electrode **12** are disposed so that the respective branches **11b** and **12b** thereof mesh with each other.

In the example shown in FIG. **17****,** a lateral field is generated by the first electrode **11** and the second electrode **12,** and a vertical field is generated by the first electrode **11,** the second electrode **12,** the third electrode **13,** and the fourth electrode **14.** In other words, a lateral field is generated by the pair of interdigitated electrodes being provided as the upper electrode (the first electrode **11** and second electrode **12**). A pixel having the electrode structure shown in FIG. **17** is also able to switchably present the black displaying state, the white displaying state, or the transparent displaying state.

Although the above description is directed to the case of conducting multicolor displaying by the field sequential method, a liquid crystal display device according to an embodiment of the present invention does not need to be of the type that performs multicolor displaying by the field sequential method. Even in a type of liquid crystal display device whose liquid crystal display panel includes color filters, the ability of a pixel to switchably present the black displaying state, the white displaying state, or the transparent displaying state will prevent doubling blur.

### INDUSTRIAL APPLICABILITY

According to an embodiment of the present invention, there is provided a liquid crystal display device which excels in both response characteristics and display quality, the liquid crystal display device being suitable for use as a see-through display. A liquid crystal display device (see-through display) according to an embodiment of the present invention is used as a display device for an information display system or digital signage, for example.

### REFERENCE SIGNS LIST

- **1**: liquid crystal display panel

- **2**: illumination element
- **2a**: light source unit
- **2b**: light guide plate
- **10**: first substrate (rear substrate)
- **10a**: transparent substrate
- **11**: first electrode (upper electrode)
- **11a**: slit
- **11b**: branch
- **12**: second electrode (lower electrode, upper electrode)
- **12a**: slit
- **12b**: branch
- **13**: insulating layer
- **14**: first horizontal alignment film
- **15**: first polarizing plate
- **15a**: transmission axis of first polarizing plate
- **16A**: first TFT
- **16B**: second TFT
- **17**: gate bus line
- **18**: source bus line
- **19**: fourth electrode (lower electrode)
- **20**: second substrate (front substrate)
- **20a**: transparent substrate
- **21**: third electrode (counter electrode)
- **24**: second horizontal alignment film
- **25**: second polarizing plate
- **25a**: transmission axis of second polarizing plate
- **30**: liquid crystal layer
- **31**: liquid crystal molecules
- **50**: case
- **100, 200**: liquid crystal display device

## Claims

1. A liquid crystal display device comprising a liquid crystal display panel including a first substrate and a second substrate opposing each other and a liquid crystal layer provided between the first substrate and the second substrate,
the liquid crystal display device having a plurality of pixels arranged in a matrix array, wherein,
the first substrate includes a first electrode provided for each of the plurality of pixels, and a second electrode for generating a lateral field across the liquid crystal layer in cooperation with the first electrode;
the second substrate includes a third electrode opposing the first electrode and the second electrode for generating a vertical field across the liquid crystal layer in cooperation with the first electrode and the second electrode;each of the plurality of pixels is capable of switchably presenting
a black displaying state where black displaying is performed with a vertical field being generated across the liquid crystal layer,
a white displaying state where white displaying is performed with a lateral field being generated across the liquid crystal layer, or
a transparent displaying state where a rear face side of the liquid crystal display panel is visible in a see-through manner with no voltage being applied to the liquid crystal layer;
in the transparent displaying state, liquid crystal molecules in the liquid crystal layer take a twist alignment;
the first electrode has a plurality of slits extending along a predetermined direction; and
in the white displaying state and the transparent displaying state, the liquid crystal molecules near a center along a thickness direction of the liquid crystal layer are aligned substantially parallel or substantially orthogonal to the predetermined direction.

2. The liquid crystal display device of claim 1, wherein,
the liquid crystal display panel further includes a pair of horizontal alignment films opposing each other via the liquid crystal layer; and
a pretilt direction defined by each of the pair of horizontal alignment films constitutes an angle of substantially 45° with respect to the predetermined direction.

3. The liquid crystal display device of claim 2, wherein,
the liquid crystal display panel further includes a pair of polarizing plates opposing each other via the liquid crystal layer, the pair of polarizing plates being placed in crossed Nicols; and
respective transmission axes of the pair of polarizing plates are substantially parallel or substantially orthogonal to the respective pretilt directions defined by the pair of horizontal alignment films.

4. The liquid crystal display device of any of claims 1 to 3, wherein the first electrode is provided via an insulating layer on the second electrode.

5. The liquid crystal display device of any of claims 1 to 3, wherein,
the first substrate further includes a fourth electrode for generating a vertical field across the liquid crystal layer in cooperation with the first electrode, the second electrode, and the third electrode; and
the first electrode and the second electrode are provided via an insulating layer on the fourth electrode.

6. The liquid crystal display device of any of claims 1 to 5, wherein the liquid crystal layer contains liquid crystal molecules having positive dielectric anisotropy.

7. The liquid crystal display device of any of claims 1 to 6, further comprising an illumination element capable of switchably irradiating the liquid crystal display panel with a plurality of color rays including red light, green light, and blue light.

8. The liquid crystal display device of any of claims 1 to 7, performing multicolor displaying by a field sequential method.

9. The liquid crystal display device of any of claims 1 to 8, wherein the liquid crystal display panel includes no color filters.

## Patentansprüche

1. Flüssigkristallanzeigevorrichtung, umfassend ein Flüssigkristallanzeigefeld, das ein erstes Substrat und ein zweites Substrat, die einander gegenüberliegen, und eine zwischen dem ersten Substrat und dem zweiten Substrat vorgesehene Flüssigkristallschicht umfasst,
wobei die Flüssigkristallanzeigevorrichtung eine Vielzahl von Pixeln aufweist, die in einem Matrix-Array angeordnet sind, wobei
das erste Substrat eine für jedes der Vielzahl von Pixeln vorgesehene erste Elektrode und eine zweite Elektrode, um ein laterales Feld über die Flüssigkristallschicht im Zusammenwirken mit der ersten Elektrode zu erzeugen, umfasst;
das zweite Substrat eine der ersten Elektrode und der zweiten Elektrode gegenüberliegende dritte Elektrode umfasst, um ein vertikales Feld über die Flüssigkristallschicht im Zusammenwirken mit der ersten Elektrode und der zweiten Elektrode zu erzeugen;
wobei jedes der Vielzahl von Pixeln umschaltbar darstellen kann einen schwarzen Anzeigezustand, in dem eine schwarze Anzeige ausgeführt wird, wobei ein vertikales Feld über die Flüssigkristallschicht erzeugt wird,
einen weißen Anzeigezustand, in dem eine weiße Anzeige ausgeführt wird, wobei ein laterales Feld über die Flüssigkristallschicht erzeugt wird, oder
einen transparenten Anzeigezustand, in dem eine hintere Stirnseite des Flüssigkristallanzeigefeldes in Durchsicht sichtbar ist, wobei keine Spannung an die Flüssigkristallschicht angelegt ist;
im transparenten Anzeigezustand Flüssigkristallmoleküle in der Flüssigkristallschicht eine Drehausrichtung übernehmen;
die erste Elektrode eine Vielzahl von Schlitzen aufweist, die entlang einer vorbestimmten Richtung verlaufen; und
in dem weißen Anzeigezustand und dem transparenten Anzeigezustand die Flüssigkristallmoleküle nahe einer Mitte entlang einer Dickenrichtung der Flüssigkristallschicht im Wesentlichen parallel oder im Wesentlichen orthogonal zu der vorbestimmten Richtung ausgerichtet sind.

2. Flüssigkristallanzeigevorrichtung nach Anspruch 1, wobei
das Flüssigkristallanzeigefeld ferner ein Paar horizontaler Ausrichtungsfilme umfasst, die über die Flüssigkristallschicht einander gegenüberliegen; und
eine Vorzugs- bzw. Pre-Tilt-Richtung, die durch jeden des Paars horizontaler Ausrichtungsfilme definiert ist, einen Winkel von im Wesentlichen 45° bezüglich der vorbestimmten Richtung bildet.

3. Flüssigkristallanzeigevorrichtung nach Anspruch 2, wobei
das Flüssigkristallanzeigefeld ferner ein Paar polarisierender Platten umfasst, die über die Flüssigkristallschicht einander gegenüberliegen, wobei das Paar polarisierender Platten in gekreuzten Nicolschen Prismen platziert ist; und
jeweilige Transmissionsachsen des Paars polarisierender Platten im Wesentlichen parallel oder im Wesentlichen orthogonal zu den jeweiligen Pre-Tilt-Richtungen sind, die durch das Paar horizontaler Ausrichtungsfilme definiert sind.

4. Flüssigkristallanzeigevorrichtung nach einem der Ansprüche 1 bis 3, wobei die erste Elektrode über eine isolierende Schicht auf der zweiten Elektrode vorgesehen ist.

5. Flüssigkristallanzeigevorrichtung nach einem der Ansprüche 1 bis 3, wobei
das erste Substrat ferner eine vierte Elektrode umfasst, um ein vertikales Feld über die Flüssigkristallschicht im Zusammenwirken mit der ersten Elektrode, der zweiten Elektrode und der dritten Elektrode zu erzeugen; und
die erste Elektrode und die zweite Elektrode über eine isolierende Schicht auf der vierten Elektrode vorgesehen sind.

6. Flüssigkristallanzeigevorrichtung nach einem der Ansprüche 1 bis 5, wobei die Flüssigkristallschicht Flüssigkristallmoleküle mit einer positiven dielektrischen Anisotropie enthält.

7. Flüssigkristallanzeigevorrichtung nach einem der Ansprüche 1 bis 6, ferner umfassend ein Beleuchtungselement, das das Flüssigkristallanzeigefeld mit einer Vielzahl von rotes Licht, grünes Licht und blaues Licht umfassenden Farbstrahlen umschaltbar bestrahlen kann.

8. Flüssigkristallanzeigevorrichtung nach einem der Ansprüche 1 bis 7, eine Mehrfarbenanzeige durch ein feldsequenzielles Verfahren durchführend.

9. Flüssigkristallanzeigevorrichtung nach einem der Ansprüche 1 bis 8, wobei das Flüssigkristallanzeigefeld keine Farbfilter enthält.

## Revendications

1. Dispositif d'affichage à cristaux liquides comprenant un panneau d'affichage à cristaux liquides qui contient un premier substrat et un deuxième substrat face à face, et une couche de cristaux liquides prévue entre le premier substrat et le deuxième substrat, le dispositif d'affichage à cristaux liquides comportant plusieurs pixels disposés dans un réseau matriciel,
le premier substrat contenant une première électrode prévue pour chacun des pixels, et une deuxième électrode pour générer un champ électrique à travers la couche de cristaux liquides en coopération avec la première électrode ;
le deuxième substrat contenant une troisième électrode qui fait face aux première et deuxième électrodes pour générer un champ vertical à travers la couche de cristaux liquides, en coopération avec lesdites première et deuxième électrodes ; chacun des pixels étant apte à présenter de manière commutable
un état d'affichage noir dans lequel un affichage noir est réalisé, avec un champ vertical qui est généré à travers la couche de cristaux liquides,
un état d'affichage blanc dans lequel un affichage blanc est réalisé, avec un champ latéral qui est généré à travers la couche de cristaux liquides, ou
un état d'affichage transparent dans lequel un côté de face arrière du panneau d'affichage à cristaux liquides est visible par transparence, aucune tension n'étant appliquée à la couche de cristaux liquides ;
dans l'état d'affichage transparent, les molécules de cristaux liquides de la couche de cristaux liquides prenant un alignement tourné ;
la première électrode présentant plusieurs fentes qui s'étendent le long d'une direction prédéterminée ; et
dans l'état d'affichage blanc et l'état d'affichage transparent, les molécules de cristaux liquides situées près d'un centre, dans le sens de l'épaisseur de la couche de cristaux liquides, étant alignées globalement parallèlement ou globalement perpendiculairement à la direction prédéterminée.

2. Dispositif d'affichage à cristaux liquides de la revendication 1, dans lequel
le panneau d'affichage à cristaux liquides contient également une paire de films d'alignement horizontal qui se font face par l'intermédiaire de la couche de cristaux liquides ; et
une direction de préinclinaison définie par chacun des deux films d'alignement horizontal définit un angle de pratiquement 45° par rapport à ladite direction prédéterminée.

3. Dispositif d'affichage à cristaux liquides de la revendication 2, dans lequel
le panneau d'affichage à cristaux liquides contient également une paire de plaques de polarisation qui se font face par l'intermédiaire de la couche de cristaux liquides, ladite paire de plaques de polarisation étant placée en Nicols croisés ; et
les axes de transmission respectifs de la paire de plaques de polarisation sont globalement parallèles ou globalement perpendiculaires aux directions de préinclinaison respectives définies par la paire de films d'alignement horizontal.

4. Dispositif d'affichage à cristaux liquides de l'une quelconque des revendications 1 à 3, dans lequel la première électrode est disposée par l'intermédiaire d'une couche isolante sur la deuxième électrode.

5. Dispositif d'affichage à cristaux liquides de l'une quelconque des revendications 1 à 3, dans lequel
le premier substrat contient également une quatrième électrode pour générer un champ vertical à travers la couche de cristaux liquides, en coopération avec la première électrode, la deuxième électrode et la troisième électrode ; et
la première électrode et la deuxième électrode sont disposées par l'intermédiaire d'une couche isolante sur la quatrième électrode isolante.

6. Dispositif d'affichage à cristaux liquides de l'une quelconque des revendications 1 à 5, dans lequel la couche de cristaux liquides contient des molécules de cristaux liquides qui présentent une anisotropie diélectrique positive.

7. Dispositif d'affichage à cristaux liquides de l'une quelconque des revendications 1 à 6, comprenant également un élément d'éclairage apte à exposer de manière commutable le panneau d'affichage à cristaux liquides à plusieurs rayons de couleur comprenant une lumière rouge, une lumière verte et une lumière bleue.

8. Dispositif d'affichage à cristaux liquides de l'une quelconque des revendications 1 à 7, qui réalise un affichage multicolore à l'aide d'un procédé à séquence de trame.

9. Dispositif d'affichage à cristaux liquides de l'une quelconque des revendications 1 à 8, dans lequel le panneau d'affichage à cristaux liquides ne contient pas de filtres colorés.
